# EUROPÄISCHE PATENTSCHRIFT

(11) **EP 2 686 526 B1**
(45) Veröffentlichungstag und Bekanntmachung des Hinweises auf die Patenterteilung: **08.04.2015**
(21) Anmeldenummer: 12705680.2
(22) Anmeldetag: 24.02.2012
(51) Int. Cl.: F01K 23/06, F01K 23/10, F22B 1/18, F22B 37/50, F01K 25/08, F02G 5/02

(54) **VERFAHREN ZUM BETREIBEN EINES DAMPFKREISPROZESSES**
METHOD FOR OPERATING A STEAM CYCLE PROCESS
PROCÉDÉ POUR FAIRE FONCTIONNER UN PROCESSUS À CIRCUIT DE VAPEUR

(30) Priorität: 17.03.2011 DE 102011005722
(43) Veröffentlichungstag der Anmeldung: 22.01.2014
(73) Patentinhaber: Robert Bosch GmbH, 70442 Stuttgart (DE)
(72) Erfinder: EISENMENGER, Nadja, 70469 Stuttgart (DE); BRENK, Achim, 75236 Kaempfelbach (DE); SEHER, Dieter, 74360 Ilsfeld (DE); REWERS, Gregory, 71701 Schwieberdingen (DE); MAGEL, Hans-Christoph, 72764 Reutlingen (DE); WENGERT, Andreas, 71549 Auenwald (DE)
(86) Internationale Anmeldenummer: PCT/EP2012/053132
(87) Internationale Veröffentlichungsnummer: WO 2012/123230

(56) Entgegenhaltungen:
- EP-A1- 2 357 349
- EP-A1- 2 466 079
- DE-A1-102009 003 850
- DE-B3-102007 020 086

## Beschreibung

Die Erfindung betrifft ein Verfahren zum Betreiben eines Dampfkreisprozesses zur Abwärmenutzung einer Brennkraftmaschine nach dem Oberbegriff des Anspruchs 1.

### Stand der Technik

Aus DE 102 28 868 B4 ist eine Vorrichtung zur Erzeugung mechanischer Arbeit mittels einer Dampfkraftmaschine bekannt. In einem geschlossenen Kreislauf sind ein Speisewasserbehälter, eine Speisepumpe, ein Verdampfer zur Dampferzeugung, eine Dampfkraftmaschine und ein Kondensator angeordnet. Dem Verdampfer wird durch die Speisepumpe Speisewasser aus dem Speisewasserbehälter zugeführt. Das Speisewasser wird im Verdampfer verdampft und einer Dampfkraftmaschine zugeführt. Die Dampfkraftmaschine erzeugt mechanische Energie. Der aus der Dampfkraftmaschine austretende entspannte Dampf wird mittels eines Kondensators kondensiert. Das kondensierte Wasser wird dem Speisewasserbehälter zugeführt. Über dem Speisewasserbehälter befindet sich ein Schutzgasraum. Bei Nichtbetrieb der Vorrichtung soll das Schutzgas aus dem Schutzgasraum Speisewasser aus Teilen des geschlossenen Kreislaufes verdrängen und dadurch frostempfindliche Teile vor Beschädigung schützen.

Aus der DE 10 2007 020 086 B3 ist eine Betriebsflüssigkeit für einen Dampfkreisprozess bekannt, die einen Schmelzpunkt besitzt, der unterhalb des Schmelzpunktes des Arbeitsmediums des Dampfkreisprozesses liegt. Die Betriebsflüssigkeit wird zur Frostschutzsicherheit mit dem Arbeitsmedium vor der Speisepumpe vermischt und im Verdampfer als Flüssigkeit wieder aus dem Dampfkreisprozess ausgeschieden.

Die EP-A1-2357349 sowie die EP-A1-2466079 offenbaren ebenfalls Dampfkreisprozesse zur Abwärmenutzung einer Brennkraftmaschine. Diese bekannte Stand der Technik sucht Möglichkeiten zur Frostschutz. Die EP-A1-2 357 349 entlehrt jedoch dazu insbesondere nicht die Speisepumpe und die EP-A1-2466079 benützt dazu eine separate Entlehrungspumpe.

### Offenbarung der Erfindung

Das erfindungsgemäße Verfahren zum Betreiben eines Dampfkreisprozesses zur Abwärmenutzung einer Brennkraftmaschine mit den kennzeichnenden Merkmalen des unabhängigen Anspruches hat den Vorteil, dass durch den Weiterbetrieb mindestens einer der Pumpen nach dem Beenden der Zirkulation des Arbeitsmediums zumindest aus der weiterbetriebenen Pumpe das Arbeitsmedium entleert wird und dadurch flüssiges Arbeitsmedium aus der Pumpe transportiert wird. Die zumindest eine Pumpe wird nach dem Beenden der Zirkulation solange weiterbetrieben bis das flüssige Arbeitsmedium fast vollständig aus der Pumpe entfernt ist. Die zumindest eine weiterbetriebene Pumpe wird durch den Weiterbetrieb nach dem Beenden der Zirkulation des Arbeitsmediums frostsicher gemacht. Ist der Leitungskreis nach dem Beenden der Zirkulation des Arbeitsmediums Temperaturen ausgesetzt, bei denen das Arbeitsmedium einfriert, besteht die Gefahr, dass Komponenten des Leitungskreises durch das sich beim Einfrieren ausdehnende Arbeitsmedium geschädigt werden. Befindet sich in der weiterbetriebenen Pumpe nur noch eine geringe Menge des flüssigen Arbeitsmediums können Schäden beim Einfrieren des flüssigen Arbeitsmediums vermieden werden.

Komponenten des Leitungskreises, die sich an die weiterbetriebene Pumpe anschließen, wie z. B. eine vorgelagerte Leitung, werden durch den Weiterbetrieb der Pumpe auch entleert und somit beim Einfrieren frostsicher gemacht und vor Schäden geschützt.

Durch den Weiterbetrieb der mindestens einen Pumpe ist ein Verfahren gezeigt, um empfindliche Komponenten des Leitungskreises frostsicher zu machen. Es muss kein zusätzliches Schutzgas in den Leitungskreis eingelassen werden, um das flüssiges Arbeitsmedium zu verdrängen. Ein zusätzlicher Prozess zum Entfernen des Schutzgases vor dem Weiterbetrieb des Dampfkraftprozesses entfällt. Ein Schützen vor Beschädigung beim Einfrieren wird alleine mit Mitteln, die im Leitungskreis vorhanden sind, durchgeführt.

In den abhängigen Ansprüchen sind vorteilhafte Ausgestaltungen und Weiterbildungen des erfindungsgemäßen Verfahrens angegeben.

Es zeigt sich als besonders zweckmäßig, wenn dass Beenden der Zirkulation des Arbeitsmediums nach einem Stillstand der Brennkraftmaschine eintritt, da die Brennkraftmaschine nach ihrem Stillstand keine thermische Energie an den Leitungskreis abgeben kann und somit eine weitere Zirkulation des Arbeitsmediums und ein Weiterbetrieb der einzelnen Komponenten des Leitungskreises nicht benötigt wird. Durch das Beenden des Weiterbetriebs der einzelnen Komponenten des Leitungskreises und das Beenden der Zirkulation des Arbeitsmediums kann der Energieverbrauch reduziert werden.

Nach dem Beenden der Zirkulation des Arbeitsmediums ist ein Weiterbetrieb der Pumpe, die als Speisepumpe des Leitungskreises zwischen dem Speisewasserbehälter und dem Wärmetauscher angeordnet ist, vorteilhaft, da aus der Speisepumpe und dem Leitungsabschnitt, der der Speisepumpe vorgelagert ist, flüssiges Arbeitsmedium entfernt wird. Die Speisepumpe ist eine besonders empfindliche Komponente des Leitungskreises und wird durch einen Weiterbetrieb nach dem Beenden der Zirkulation des Arbeitsmediums frostsicher gemacht.

Ein besonderer Vorteil ergibt sich, wenn ein erstes Ventil, welches zwischen Speisewasserbehälter und Speisepumpe angeordnet ist, geschlossen wird, da durch das Verschließen des ersten Ventils verhindert wird, dass Arbeitsmedium aus dem Speisewasserbehälter angesaugt wird. Durch das Schließen des Ventils wird die Speisepumpe fast vollständig entleert.

Ein weiterer Vorteil ergibt sich, wenn ein zweites Ventil, welches in einem Leitungsabschnitt zwischen der Speisepumpe und dem Wärmetauscher angeordnet ist, geöffnet wird, da durch das Öffnen des zweiten Ventils das Arbeitsmedium aus der Speisepumpe im gesamten Leitungsabschnitt zwischen Speisepumpe und Wärmetauscher verteilt wird.

Vorteilhaft ist der Weiterbetrieb der Pumpe, die als Kondensatpumpe zwischen dem Kondensator und dem Speisewasserbehälter angeordnet ist, nach dem Beenden der Zirkulation des Arbeitsmediums, da Arbeitsmedium aus der weiterbetriebenen Kondensatpumpe und dem Kondensator in den Speisewasserbehälter gefördert wird und damit Schädigungen an dem Kondensator und der Kondensatpumpe beim Einfrieren des Leitungskreises vermieden werden.

Das Schließen eines ersten Ventils, welches zwischen Speisewasserbehälter und Speisepumpe angeordnet ist, ist bei einem Weiterbetrieb der Kondensatpumpe von Vorteil, da ein Transport von Arbeitsmedium aus dem Speisewasserbehälter zur Speisepumpe vermieden wird. Arbeitsmedium, welches aus dem Kondensator oder der Kondensatpumpe durch den Weiterbetrieb der Kondensatpumpe entfernt wird, kann sich nur im Speisewasserbehälter ansammeln und wird nicht in den anschließenden Leitungsabschnitt zwischen Speisewasserbehälter und Speisepumpe transportiert.

Vorteilhaft ist ein Weiterbetrieb der Speisepumpe und der Kondensatpumpe nach dem Beenden der Zirkulation des Arbeitsmediums, da durch den Weiterbetrieb beider Pumpen aus mehreren Komponenten des Leitungskreises das flüssige Arbeitsmedium verdrängt wird. Es wird flüssiges Arbeitsmedium aus der Speisepumpe, aus der Kondensatpumpe und aus dem Kondensator verdrängt und somit gleichzeitig eine Schädigung dieser Komponenten beim Einfrieren des Leitungskreises vermieden.

### Zeichnung

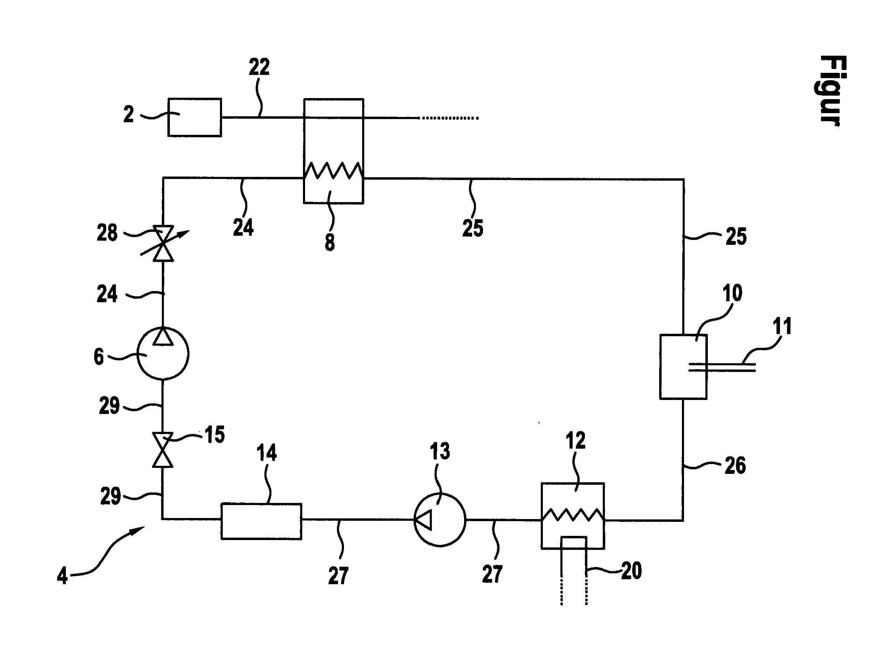

Ein Ausführungsbeispiel der Erfindung ist in der Zeichnung dargestellt und wird in der nachfolgenden Beschreibung näher erläutert. In der einzigen Figur ist ein Dampfkreisprozess schematisch dargestellt.

Dieser Dampfkreisprozess weist einen Leitungskreises 4 zur Abwärmenutzung einer Brennkraftmaschine 2 auf. Im Leitungskreis 4 zirkuliert ein Arbeitsmedium. Im Leitungskreis 4 sind mindestens ein Wärmetauscher 8, eine Expansionsmaschine 10, ein Kondensator 12, ein Speisewasserbehälter 14 und mindestens eine Pumpe 6, 13 angeordnet.

Die Brennkraftmaschine 2 kann insbesondere als luftverdichtende, selbstzündende oder gemischverdichtende, fremdgezündete Brennkraftmaschine 2 ausgestaltet sein. Spezielle eignet sich die Vorrichtung und das dazugehörige Verfahren zur Abwärmenutzung für Anwendungen bei Kraftfahrzeugen. Das Verfahren zur Abwärmenutzung der Erfindung eignet sich allerdings auch für andere Anwendungsfälle.

Die Brennkraftmaschine 2 verbrennt Brennstoff, um mechanische Energie zu erzeugen. Die hierbei entstehenden Abgase werden über eine Abgasanlage, in der ein Abgaskatalysator angeordnet sein kann, ausgestoßen. Ein Leitungsabschnitt 22 der Abgasanlage ist durch den Wärmetauscher 8 geführt. Wärmeenergie aus den Abgasen oder der Abgasrückführung wird über den Leitungsabschnitt 22 im Wärmetauscher 8 an das Arbeitsmedium im Leitungskreis 4 abgegeben, so dass das Arbeitsmedium im Wärmetauscher 8 verdampft und überhitzt werden kann.

Der Wärmetauscher 8 des Leitungskreises 4 ist über eine Leitung 25 mit der Expansionsmaschine 10 verbunden. Die Expansionsmaschine 10 kann als Turbine oder Kolbenmaschine ausgestaltet sein. Über die Leitung 25 strömt das verdampfte Arbeitsmedium zur Expansionsmaschine 10 und treibt diese an. Die Expansionsmaschine 10 weist eine Antriebswelle 11 auf, über die die Expansionsmaschine 10 mit einer Last verbunden ist. Hierdurch kann beispielsweise mechanische Energie an einen Antriebsstrang übertragen werden oder zum Antreiben eines elektrischen Generators einer Pumpe oder dergleichen dienen. Nach dem Durchströmen der Expansionsmaschine 10 wird das Arbeitsmedium über eine Leitung 26 zum Kondensator 12 geführt. Das über die Expansionsmaschine 10 entspannte Arbeitsmedium wird im Kondensator 12 verflüssigt. Der Kondensator 12 kann mit einem Kühlkreislauf 20 verbunden sein. Bei diesem Kühlkreislauf 20 kann es sich z. B. um einen Kühlkreislauf der Brennkraftmaschine 2 handeln.

Das im Kondensator 12 verflüssigte Arbeitsmedium wird über eine weitere Leitungen 27 zum Speisewasserbehälter 14 transportiert. In der Leitung 27 kann sich eine Kondensatpumpe 13 befinden, welche das verflüssigte Arbeitsmedium aus dem Kondensator 12 zum Speisewasserbehälter 14 transportiert. Der Speisewasserbehälter 14 dient als Reservoir für das flüssige Arbeitsmedium im Leitungskreis 14.

Das flüssige Arbeitsmedium aus dem Speisewasserbehälter 14 wird über die Leitung 29 von einer Speisepumpe 6 in die Leitung 24 transportiert. In der Leitung 29 kann sich ein erstes Ventil 15 befinden, welches geöffnet oder geschlossen werden kann.

In der Leitung 24 kann sich ein zweites Ventil 28 befinden, welches in Form eines Druckregelventils zur Druckregelung des Arbeitsmediums im Zulauf zum Wärmetauscher 8 dient. Die Verdampfungstemperatur des Arbeitsmediums lässt sich mit Hilfe des vorgegebenen Druckes im Zulauf zum Wärmetauscher 8 regulieren.

Die Leitung 24 führt direkt in den Wärmetauscher 8, indem das Arbeitsmedium verdampft und gegebenenfalls überhitzt wird. Über die Leitung 25 gelangt das verdampfte Arbeitsmedium erneut zur Expansionsmaschine 10. Das Arbeitsmedium durchströmt erneut den Leitungskreis 4. Durch die mindestens eine Pumpe 6,13 und die Expansionsmaschine 10, ist eine Durchlaufrichtung des Arbeitsmediums durch den Leitungskreis 4 gegeben. Somit kann den Abgasen und den Bestandteilen der Abgasrückführung der Brennkraftmaschine 2 über den Wärmetauscher 8 fortwährend Wärmeenergie entzogen werden, die in Form von mechanischer oder elektrischer Energie abgegeben wird.

Als Arbeitsmedium kann Wasser eingesetzt werden, oder eine andere Flüssigkeit, die den thermodynamischen Anforderungen entspricht. Das Arbeitsmedium erfährt beim Durchströmen des Leitungskreises 4 thermodynamische Zustandsänderungen, die idealerweise einem Rankine-Cycle-Prozess entsprechen. In der flüssigen Phase wird das Arbeitsmedium durch die Speisepumpe 6 auf das Druckniveau für die Verdampfung komprimiert. Anschließend wird die Wärmeenergie des Abgases über den Wärmetauscher 8 an das Arbeitsmedium abgegeben. Dabei wird das Arbeitsmedium isobar verdampft und anschießend überhitzt. Danach wird der Dampf in der Expansionsmaschine 10 adiabat entspannt. Dabei wird mechanische oder elektrische Energie gewonnen. Das dampfförmige Arbeitsmedium wird dann im Kondensator 12 abgekühlt und über die Speisepumpe 6 dem Wärmetauscher 8 zugeführt.

Aufgrund der Nutzung von Wasser oder anderen Flüssigkeiten, die bei niedrigen Temperaturen einfrieren können, muss der Leitungskreis 4 oder Teile des Leitungskreises 4 mit besonders empfindliche Komponenten frostsicher gemacht werden. Durch das Einfrieren des Arbeitsmediums erfährt das Arbeitsmedium eine Zustandsänderung, bei der es sich verfestigt und ausdehnen kann. Komponenten des Leitungskreises 4 können bei diesem Vorgang zerstört werden. Das erfindungsgemäße Verfahren zum Betreiben eines Dampfkreisprozesses zur Abwärmenutzung einer Brennkraftmaschine zeigt eine Möglichkeit, Komponenten des Leitungskreises 4 durch teilweises Entleeren von flüssigem Arbeitsmedium frostsicher zu machen. Hierbei wird nach dem Beenden der Zirkulation des Arbeitsmediums mindestens eine der Pumpen 6, 13 weiterbetrieben, um zumindest aus der weiterbetriebenen Pumpe 6, 13, das Arbeitsmedium zu entleeren.

Wird nach dem Beenden der Zirkulation des Arbeitsmediums die Pumpe, die als Speisepumpe 6 des Leitungskreises 4 zwischen dem Speisewasserbehälter 14 und dem Wärmetauscher 8 angeordnet ist, weiterbetrieben, so wird flüssiges Arbeitsmedium aus der Speisepumpe 6 und der Leitung 29 verdrängt. Das flüssige Arbeitsmedium, welches sich nach dem Beenden der Zirkulation des Arbeitsmediums, noch in der Speisepumpe 6 oder der Leitung 29 befindet, wird aus der Speisepumpe 6 in die Leitung 24 transportiert. Durch das Entleeren oder teilweise Entleeren der Speisepumpe 6 vom flüssigen Arbeitsmedium befindet sich nur noch ein geringer Anteil vom flüssigen Arbeitsmedium in der Speisepumpe 6. Findet ein Einfrieren des Leitungskreises 4 statt, so ist die verbleibende Menge von flüssige Arbeitsmedium in der Speisepumpe 6 unkritisch und kann beim Einfrieren keine Schäden an der Speisepumpe 6 hervorrufen.

Um zu verhindern, dass durch den Weiterbetrieb der Speisepumpe 6 flüssiges Arbeitsmedium aus dem Speisewasserbehälter 14 angesaugt wird, kann nach dem Beenden der Zirkulation des Arbeitsmediums das erste Ventil 15, welches zwischen dem Speisewasserbehälter 14 und der Speisepumpe 6 angeordnet ist, geschlossen werden. Durch das Schließen des ersten Ventils 15 saugt die Speisepumpe 6 nur Wasser, welches sich in der Leitung 29 zwischen dem ersten Ventil 15 und der Speisepumpe 6 befindet, an. Es handelt sich nur um eine geringe Menge von flüssigem Arbeitsmedium in der Leitung 29 zwischen ersten Ventil 15 und Speisepumpe 6, welches durch den Weiterbetrieb der Speisepumpe 6 durch die Speisepumpe 6 hindurch in die Leitung 24 gefördert wird.

Befindet sich ein zweites Ventil 28 in dem Leitungsabschnitt 24, so wird dieses zweite Ventil 28 nach dem Beenden der Zirkulation des Arbeitsmediums geöffnet. Durch das Öffnen des zweiten Ventils 28 kann das flüssige Arbeitsmedium aus der Speisepumpe 6 und der Leitung 29 zwischen dem ersten Ventil 15 und der Speisepumpe 6 im gesamten Leitungsabschnitt 24 verteilt werden.

In einem weiteren Ausführungsbeispiel des erfindungsgemäßen Verfahrens wird die Kondensatpumpe 13 nach dem Beenden der Zirkulation des Arbeitsmediums weiterbetrieben, um flüssiges Arbeitsmedium zumindest aus der weiterbetriebenen Kondensatpumpe 13 und den Kondensator 12 in den Speisewasserbehälter 14 zu fördern. Wird nach dem Beenden der Zirkulation des Arbeitsmediums, die Kondensatpumpe 13 weiterbetrieben, so saugt sie das flüssige Arbeitsmedium, welches sich noch im Kondensator 12 befindet an, und transportiert dieses flüssige Arbeitsmedium durch die Leitung 27 zum Speisewasserbehälter 14. Zusätzlich wird flüssiges Arbeitsmedium, welches sich der Leitungen 27 befindet, in den Speisewasserbehälter 14 transportiert. Die Kondensatpumpe 13 entleert sich selber durch ihren Weiterbetrieb nach dem Beenden der Zirkulation des Arbeitsmediums. Es befindet sich durch diesen Vorgang nur noch eine geringe Menge an flüssigem Arbeitsmedium in der Kondensatpumpe 13 und im Kondensator 12, welches beim Einfrieren keine Schäden an der Kondensatpumpe 13 oder am Kondensator 12 hervorrufen kann.

Durch ein Verschließen des ersten Ventils 15 in der Leitung 29 wird ein Weitertransport des flüssigen Arbeitsmediums aus dem Speisewasserbehälter 14 zur Speisepumpe 6 verhindert. Das flüssige Arbeitsmedium, welches durch die Kondensatpumpe 13 in den Speisewasserbehälter 14 transportiert wurde, kann nicht aus dem Speisewasserbehälter 14 durch die Leitung 29 zur Speisepumpe 6 gelangen.

Neben dem getrennten Weiterbetrieb der Speisepumpe 6 und der Kondensatpumpe 13 nach dem Beenden der Zirkulation des Arbeitsmediums, können auch beide Pumpen 6, 13 gleichzeitig weiterbetrieben werden. Durch den gleichzeitigen Weiterbetrieb der Speisepumpe 6 und der Kondensatpumpe 13 nach dem Beenden der Zirkulation des Arbeitsmediums wird ein schnelleres Entleeren der frostempfindlichen Komponenten des Leitungskreises, wie z.B. Speisepumpe 6, Kondensator 12 und Kondensatpumpe 13, ermöglicht.

Ein Beenden der Zirkulation des Arbeitsmediums kann nach einem Stillstand der Brennkraftmaschine 2 eintreten, da nach dem Stillstand der Brennkraftmaschine 2 keine thermische Energie mehr an das Arbeitsmedium im Leitungskreis 4 abgegeben wird. Ein Weiterbetrieb der Komponenten des Leitungskreises 4 ist in diesem Fall nicht sinnvoll, da keine thermische Energie aus den Abgasen der Brennkraftmaschine 2 in thermische oder elektrische Energie durch die Expansionsmaschine 10 umgewandelt werden kann. Ein Beenden der Zirkulation kann aber auch durch andere Betriebsbedingungen der Brennkraftmaschine oder des Leitungskreises eintreten.

Der Weiterbetrieb einer oder mehrere Pumpen 6, 13 des Leitungskreises 4 nach dem Beenden der Zirkulation des Arbeitsmediums wird beendet, sobald die eine oder mehrere weiterbetriebenen Pumpen 6, 13 leergelaufen sind.

Nach dem Beenden des Weiterbetriebes der Speisepumpe 6 kann das zweite Ventil 28 in der Leitung 24 geschlossen werden, um zu verhindern das Arbeitsmedium aus der Leitung 24 und dem Wärmetauscher 8 in die Speisepumpe 6 zurückströmt.

## Patentansprüche

1. Verfahren zum Betreiben eines Dampfkreisprozesses zur Abwärmenutzung einer Brennkraftmaschine (2), wobei der Dampfkreisprozess einen Leitungskreis (4), in dem ein Arbeitsmedium zirkulierbar ist, eine Speisepumpe (6), mindestens einen Wärmetauscher (8), eine Expansionsmaschine (10), einen Speisewasserbehälter (14), um das flüssige Arbeitsmedium aufzubewahren, und einen Kondensator (12) umfasst, wobei die Speisepumpe (6) zwischen dem Speisewasserbehälter (14) und dem Wärmetauscher (8) angeordnet ist, **dadurch gekennzeichnet, dass** nach dem Beenden der Zirkulation des Arbeitsmediums die Speisepumpe (6) weiterbetrieben wird, um zumindest aus der weiterbetriebenen Speisepumpe (6) das Arbeitsmedium zu entleeren, wodurch Komponenten des Leitungskreises (4) durch teilweises Entleeren vom flüssigen Arbeitsmedium frostsicher gemacht werden.

2. Verfahren nach Anspruch 1, **dadurch gekennzeichnet, dass** ein erstes Ventil (15), welches zwischen Speisewasserbehälter (14) und Speisepumpe (6) angeordnet ist, geschlossen wird, um zu verhindern, dass Arbeitsmedium aus dem Speisewasserbehälter (14) angesaugt wird.

3. Verfahren nach Anspruch 2, **dadurch gekennzeichnet, dass** das Schließen des ersten Ventils (15) nach einem Stillstand der Brennkraftmaschine (2) eintritt.

4. Verfahren nach Anspruch 2 oder 3, **dadurch gekennzeichnet, dass** ein zweites Ventil (28), welches in einer Leitung (24) zwischen der Speisepumpe (6) und dem Wärmetauscher (8) angeordnet ist, geöffnet ist, damit das Arbeitsmedium aus der Speisepumpe (6) in die Leitung (24) und den Wärmetauscher (8) transportiert wird.

5. Verfahren nach einem der Ansprüche 2 bis 4, **dadurch gekennzeichnet, dass** eine Kondensatpumpe (13) zwischen dem Kondensator (12) und dem Speisewasserbehälter (14) angeordnet ist, die nach dem Schließen des ersten Ventils (15) weiterbetrieben wird, um das Arbeitsmedium zumindest aus der weiterbetriebenen Kondensatpumpe (13) und dem Kondensator (12) in den Speisewasserbehälter (14) zu fördern.

## Claims

1. Method for operating a steam cycle process for utilizing the waste heat of an internal combustion engine (2), the steam cycle process comprising a line circuit (4) in which a working medium can be circulated, a feed pump (6), at least one heat exchanger (8), an expansion machine (10), a feed water tank (14) in order to store the liquid working medium, and a condenser (12), the feed pump (6) being arranged between the feed water tank (14) and the heat exchanger (8), **characterized in that**, after the end of circulation of the working medium, the feed pump (6) is subsequently operated, in order to empty the working medium at least out of the subsequently operated feed pump (6) whereby components of the line circuit (4) are made frost-proof as a result of the partial emptying of the liquid working medium.

2. Method according to Claim 1, **characterized in that** a first valve (15), which is arranged between the feed water tank (14) and feed pump (6) is closed, in order to prevent working medium from being sucked in from the feed water tank (14).

3. Method according to Claim 2, **characterized in that** the closing of the first valve (15) occurs after a standstill of the internal combustion engine (2).

4. Method according to Claim 2 or 3, **characterized in that** a second valve (28), which is arranged in a line (24) between the feed pump (6) and the heat exchanger (8), is opened so that the working medium is transported out of the pump (6) into the line (24) and the heat exchanger (8).

5. Method according to one of Claims 2 to 4, **characterized in that** a condensate pump (13) is arranged between the condenser (12) and the feed water tank (14), which condensate pump is subsequently operated after the closing of the first valve (15), in order to convey the working medium at least out of the subsequently operated condensate pump (13) and the condenser (12) into the feed water tank (14).

## Revendications

1. Procédé pour faire fonctionner un processus à circuit de vapeur pour l'utilisation de la chaleur dissipée d'un moteur à combustion interne (2), le processus à circuit de vapeur comprenant un circuit de conduites (4) dans lequel peut circuler un fluide de travail, une pompe d'alimentation (6), au moins un échangeur de chaleur (8), une machine à expansion (10), un réservoir d'eau d'alimentation (14) pour conserver le fluide de travail liquide, et un condenseur (12), la pompe d'alimentation (6) étant disposée entre le réservoir d'eau d'alimentation (14) et l'échangeur de chaleur (8), **caractérisé en ce qu'**après la fin de la circulation du fluide de travail, la pompe d'alimentation (6) continue de fonctionner afin de vider le fluide de travail au moins hors de la pompe d'alimentation (6) qui continue de fonctionner, de sorte que des composants du circuit de conduites (4) soient rendus résistants au gel par la vidange partielle du fluide de travail liquide.

2. Procédé selon la revendication 1, **caractérisé en ce qu'**une première soupape (15) qui est disposée entre le réservoir d'eau d'alimentation (14) et la pompe d'alimentation (6) est fermée pour empêcher que le fluide de travail ne soit aspiré hors du réservoir d'eau d'alimentation (14).

3. Procédé selon la revendication 2, **caractérisé en ce que** la fermeture de la première soupape (15) se produit après un arrêt du moteur à combustion interne (2).

4. Procédé selon la revendication 2 ou 3, **caractérisé en ce qu'**une deuxième soupape (28) qui est disposée dans une conduite (24) entre la pompe d'alimentation (6) et l'échangeur de chaleur (8) est ouverte afin que le fluide de travail soit transporté depuis la pompe d'alimentation (6) dans la conduite (24) et l'échangeur de chaleur (8).

5. Procédé selon l'une quelconque des revendications 2 à 4, **caractérisé en ce qu'**une pompe de condensat (13) est disposée entre le condenseur (12) et le réservoir d'eau d'alimentation (14), laquelle pompe de condensat continue de fonctionner après la fermeture de la première soupape (15) afin de refouler le fluide de travail au moins hors de la pompe de condensat (13) qui continue de fonctionner et hors du condenseur (12) dans le réservoir d'eau d'alimentation (14).
